# EUROPÄISCHE PATENTSCHRIFT

(11) **EP 3 757 509 B1**
(45) Veröffentlichungstag und Bekanntmachung des Hinweises auf die Patenterteilung: **08.05.2024**
(21) Anmeldenummer: 20178329.7
(22) Anmeldetag: 04.06.2020
(51) Int. Cl.: G01B 11/25, G01S 7/497, G01B 21/04, G01S 5/00, G01S 7/40, G01S 7/52, G01S 17/42, G01S 17/89, G01S 17/931

(54) **SYSTEM ZUR AUTOMATISIERTEN VERMESSUNG VON KRAFTFAHRZEUGEN**
SYSTEM FOR AUTOMATED MEASUREMENT OF MOTOR VEHICLES
SYSTÈME DE MESURE AUTOMATISÉE DE VÉHICULES À MOTEUR

(30) Priorität: 27.06.2019 DE 102019117428
(43) Veröffentlichungstag der Anmeldung: 30.12.2020
(73) Patentinhaber: TKR Spezialwerkzeuge GmbH, 58285 Gevelsberg (DE)
(72) Erfinder: Kreischer, Torsten, 58300 Wetter (DE)
(74) Vertreter: Kalkoff & Partner Patentanwälte mbB

(56) Entgegenhaltungen:
- EP-A1- 2 511 656
- DE-A1-102004 021 892
- DE-A1-102014 106 641
- DE-A1-102017 203 155
- DE-T5-112016 002 057

## Beschreibung

Die Erfindung betrifft ein System zur automatisierten Vermessung von Kraftfahrzeugen, insbesondere Pkws, mit einer Messeinheit.

Moderne Kraftfahrzeuge, insbesondere Pkws, weisen eine Vielzahl von Fahrzeugsensoren und/oder -kameras auf, welche im Betrieb von unterschiedlichen Assistenzsystemen verwendet werden, die den Fahrer in bestimmten Fahrsituationen unterstützen. Derzeit bekannte Funktionalitäten von Fahrerassistenzsystemen sind bspw. ein Spurhalteassistent, ein Abstandsregeltempomat, ein Spurwechselassistent und ein Notbremsassistent. Zur Erfassung der Umgebungssituation nutzen die Assistenzsysteme unterschiedliche Sensoren wie bspw. Ultraschallsensoren oder Radar, Lidar und Kameras, welche den entsprechenden Assistenzsystemen die für deren Funktion notwendige Daten liefern.

Wesentlich für eine einwandfreie Funktion der Assistenzsysteme ist neben einer exakten Ausrichtung der Sensoren und Kameras ferner deren exakte Positionierung gegenüber der Fahrzeugkarosserie. Abweichungen bei der Positionierung, welche bspw. durch Instandsetzungsarbeiten der mit integrierten Sensoren und Kameras ausgestatteten Fahrzeugkarosserie nach einem Unfall auftreten können, beeinträchtigen die Funktion der Assistenzsysteme und können unter ungünstigen Umständen dazu führen, dass diese ihre Funktion nicht korrekt ausführen. Eine exakte Wiederherstellung der Fahrzeugkarosserie in ihren ursprünglichen Abmessungen ist daher für die Funktion der Assistenzsysteme von entscheidender Bedeutung. Voraussetzung für die Funktion einiger Assistenzsysteme, wie bspw. ein Spurhalteassistent ist ferner ein fehlerfrei ausgerichtetes Fahrwerk, dessen Radstellung durch die Assistenzsysteme überwacht und u. U. verändert wird.

Derzeitig wird die Kontrolle von Reparaturarbeiten rein optisch durch die Werkstattmitarbeiter vorgenommen, wobei jedoch entscheidungserhebliche Abweichungen nicht erkannt werden können.

DE 10 2017 203155 A1 offenbart eine Vorrichtung zum Kalibrieren von Fahrzeug-AssistenzSystemen mittels einer mobilen Kalibriertafel, welche automatisch in einer Schiene geführt bewegbar ist, wobei mittels einer Stereokamera die Position und Ausrichtung des Fahrzeugs in Bezug auf die Kalibriervorrichtung bestimmt wird.

Hiervon ausgehend liegt der Erfindung die Aufgabe zugrunde, ein System zur automatisierten Vermessung von Kraftfahrzeugen, insbesondere Pkws bereitzustellen, welches eine exakte Vermessung der Kraftfahrzeugkarosserie und/oder des Fahrwerks des Kraftfahrzeugs ermöglicht.

Die Erfindung löst die Aufgabe durch ein System zur automatisierten Vermessung gemäß Anspruch 1. Vorteilhafte Weiterbildungen der Erfindung sind in den abhängigen Ansprüchen angegeben.

Wesentliches Element des erfindungsgemäßen Systems zur automatisierten Vermessung von Kraftfahrzeugen ist eine Messeinheit mit
- einer Scaneinheit,
   - die zur berührungslosen und/oder taktilen 3D-Erfassung der Geometrie der Kraftfahrzeugkarosserie und/oder
   - zur Vermessung des Fahrwerks des Kraftfahrzeugs ausgebildet ist.

Die Scaneinheit ist dabei mit einer Verfahreinheit verbunden, mittels der die Messeinheit gegenüber dem zu vermessenden Kraftfahrzeug verstellt und ausgerichtet werden kann. Eine zentrale Steuereinheit dient dabei zur selbsttätigen, automatisierten Steuerung der Messeinheit und Ausrichtung der Scaneinheit gegenüber dem Kraftfahrzeug.

Durch eine automatisierte Verstellung der Messeinheit gegenüber dem Kraftfahrzeug kann diese derart um das Kraftfahrzeug herumbewegt werden, dass eine vollständige 3D-Erfassung der Fahrzeugkarosserie erfolgt. Ferner kann auch ergänzend oder alternativ eine Vermessung des gesamten Fahrwerks des Kraftfahrzeugs, insbesondere der Spur- bzw. Radstellung erfolgen. Die Verstellung der Messeinheit erfolgt dabei über die zentrale Steuereinheit der Messeinheit, welche diese in einer vorgegebenen, bspw. fahrzeugtypabhängigen Weise verfährt.

Die vollständige Erfassung der Fahrzeugkarosserie und/oder des Fahrwerks des Kraftfahrzeugs ermöglicht es, die festgestellten Abmessungen mit den fahrzeugspezifisch vorgegebenen Abmessungen zu vergleichen. Außerhalb eines Toleranzbereichs liegende Abweichungen können so in einfacher Weise identifiziert werden, sodass verhindert wird, dass solche Kraftfahrzeuge wieder in Betrieb genommen werden, deren Kraftfahrzeugkarosserie oder Fahrwerk nicht die für einen ordnungsgemäßen Betrieb der Fahrzeugassistenzsysteme notwendigen Voraussetzungen aufweist.

Ein Abgleich der mit der Messeinheit erfassten Ist-Daten mit den Soll-Daten kann dabei unmittelbar in der Steuereinheit der Messeinheit erfolgen. Alternativ besteht die Möglichkeit, die Messdaten an eine separate Auswerteinheit zu übermitteln, in welcher die Messdaten mit den in einer Datenbank hinterlegten kraftfahrzeugspezifischen Daten verglichen werden.

Zur Übermittlung der spezifischen Kraftfahrzeugdaten und/oder der durch die Scaneinheit übermittelten Messdaten ist dabei nach einer vorteilhaften Weiterbildung der Erfindung vorgesehen, dass die Steuereinheit mit einer Kommunikationseinheit zur Übermittlung der Kraftfahrzeugdaten und/oder Messdaten verbunden ist. Die Übermittlung der Daten kann dabei sowohl kabellos, bspw. über eine Bluetooth- oder WLAN-Verbindung erfolgen, wobei die spezifischen Kraftfahrzeugdaten dann über eine zentrale Datenbank abgerufen und/oder die Messdaten zur Auswertung an eine Auswerteinheit gesendet werden. Ferner besteht die Möglichkeit, Fahrzeugdaten direkt am Fahrzeug über bspw. eine OBD-Schnittstelle abzufragen, wobei hierzu die Kommunikationseinheit mit entsprechenden Steckerverbindungen ausgestaltet ist.

Insbesondere eine direkte Kommunikation mit dem zu vermessenden Fahrzeug sowohl in drahtloser oder kabelgebundener Weise gewährleistet dabei in besonders zuverlässiger Weise, dass die für den Messvorgang erforderlichen Daten in korrekter Weise bereitgestellt werden. Ferner besteht die Möglichkeit, ggf. im Fahrzeug hinterlegte Soll-Daten abzufragen, sodass diese direkt mit den Messdaten abgeglichen werden können. Alternativ können auch die Soll-Daten über eine zentrale Datenbank abgerufen werden.

Eine Erfassung der Geometrie der Kraftfahrzeugkarosserie und/oder des Fahrwerks kann grundsätzlich in beliebiger Weise erfolgen. So besteht bspw. die Möglichkeit, die Scaneinheit mit taktilen Sensoren auszustatten, welche über die Oberfläche der Fahrzeugkarosserie bewegt werden, um so die notwendigen Objektdaten zu ermitteln. Nach einer vorteilhaften Ausgestaltung der Erfindung ist jedoch vorgesehen, dass die Scaneinheit zur optischen Erfassung der Geometrie der Kraftfahrzeugkarosserie und/oder Vermessung des Fahrwerks ausgebildet ist, insbesondere einen Laserscanner aufweist.

Die Verwendung eines optischen Erfassungssystems, insbesondere eines Laserscanners, erlaubt es, berührungslos die gesamte Oberfläche der Kraftfahrzeugkarosserie zuverlässig zu ermitteln. Ein geeigneter Laserscanner überstreicht beim Laserscanning die Oberfläche der Fahrzeugkarosserie oder notwendige Referenzpunkte am Fahrwerk zeilen- oder rasterartig mit einem Laserstrahl, um diese zu vermessen. Die Verwendung eines Laserscanners ermöglicht eine besonders exakte Erstellung eines 3D-Abbilds der Kraftfahrzeugkarosserie und somit eine zuverlässige Feststellung von nicht tolerierbaren Abweichung nach einer Karosserieinstandsetzung.

Neben einer exakten Positionierung der Sensoren und Kameras des Fahrzeugs und einem ordnungsgemäß ausgerichteten Fahrwerk ist ferner eine exakte Ausrichtung der Sensoren und Kameras zur Fahrachse für die einwandfreie Funktion der Fahrassistenzsysteme erforderlich. So ist es nach einem notwendigen Austausch der Sensoren und/oder Kameras, bspw. im Rahmen einer Unfallinstandsetzung, zur Gewährleistung der Funktion der Assistenzsysteme erforderlich, die Kameras und/oder Sensoren auf ihre Ausrichtung hin zu überprüfen und ggf. zu justieren. Gemäß der Erfindung ist hierzu vorgesehen, dass die Messeinheit ein Ausrichtelement zur Ausrichtung von Fahrzeugsensoren und/oder -kameras an dem Fahrzeug aufweist.

Bei den Ausrichtelementen handelt es sich bspw. um eine Kalibriertafel, mittels der die Ausrichtung des Fahrzeugsensors und/oder -kamera gegenüber der Fahrachse überprüft werden kann, sodass ggf. Einstellarbeiten vorgenommen werden können. Über die Verfahreinheit kann die Messeinheit dabei automatisiert in die für die jeweilige Ausrichtung erforderliche Position verbracht werden, wobei das Ausrichtelement in einer für die Überprüfung exakten Position angeordnet werden kann.

Die erfindungsgemäße Messeinheit mit einem Ausrichtelement ermöglicht es somit in besonders einfacher und komfortabler Weise, die Ausrichtung der Fahrzeugsensoren zu überprüfen und ggf. Einstellungen vorzunehmen. Die Positionierung der Ausrichtelemente gegenüber dem auszurichtenden Fahrzeugsensor und/oder -kamera erfolgt dabei über die Verfahreinheit, die es ermöglicht, das Ausrichtelement gegenüber dem Fahrzeug frei im Raum zu positionieren. Bei der Verfahreinheit kann es sich bspw. um ein Fahrwerk mit einem elektromotorischen mit Rollen verbundenen Antrieb handeln, welcher in einfacher Weise eine freie Positionierbarkeit der Messeinheit im Raum, insbesondere in der Werkstatt gegenüber dem Fahrzeug ermöglicht. Eine Positionierung der Messeinheit und Ausrichtung des Ausrichtelements erfolgt dabei über die zentrale Steuereinheit.

Die Ausrichtung des Ausrichtelements kann somit allein über die Verfahreinheit erreicht werden, wobei diese neben einer Verstellung der Messeinheit im Raum auch die Möglichkeit zu dessen Verdrehung bietet, wodurch eine exakte Positionierung erfolgen kann. Nach einer besonders vorteilhaften Ausgestaltung der Erfindung ist jedoch vorgesehen, dass das Ausrichtelement verstellbar an der Messeinheit angeordnet ist, bspw. durch einen mit der Steuereinheit verbundenen Stellantrieb. Bei dem Stellantrieb handelt es sich um ein beliebig ausgestalteten Verstellmechanismus, über den das Ausrichtelement, bspw. eine Kalibriertafel, mit der Messeinheit verbunden ist. Im Bedarfsfall kann somit nach einer Positionierung der Messeinheit über die Verfahreinheit, durch den Stellantrieb eine besonders exakte Ausrichtung des Ausrichtelements erfolgen.

Eine Vermessung des Kraftfahrzeugs mittels der Messeinheit kann bspw. in der Weise erfolgen, dass das zu vermessende Kraftfahrzeug an einer vorgegebenen Messstelle positioniert wird, die dann in festgelegter Weise von der Messeinheit umfahren wird. Nach einer vorteilhaften Weiterbildung der Erfindung ist jedoch vorgesehen, dass die Messeinheit eine mit der Verfahreinheit verbundene Positionserfassungseinheit zur Positionsbestimmung der Scaneinheit und/oder des Ausrichtelements gegenüber dem Kraftfahrzeug und/oder den Fahrzeugsensoren und/oder -kameras aufweist. Die Positionserfassungseinheit, welche bspw. ein Lidar-System, Beschleunigungssensoren, Magnetfeldsensoren, Neigungssensoren und/oder 3D-Kameras aufweist, erlaubt es, das Fahrzeug so zu erfassen, dass auch ohne eine exakte Positionierung des Kraftfahrzeugs an der Messstelle und ohne Positionsgeber am Kraftfahrzeug eine exakte Vermessung des Kraftfahrzeugs erfolgen kann. Ferner erlaub die Positionserfassungseinheit auch eine exakte Positionsbestimmung des Ausrichteelements gegenüber den Fahrzeugsensoren und/oder -kameras. Die Positionserfassungseinheit erlaubt es, in einem festgelegten Bereich die Messeinheit frei gegenüber dem Fahrzeug zu verstellen, wobei dieses hierzu nicht exakt in einer vorgegebenen Messstelle positioniert werden muss. Gleichzeitig wird eine exakte Ausrichtung des Ausrichtelements gegenüber dem Fahrzeug gewährleistet.

Nach einer weiteren Ausgestaltung der Erfindung ist vorgesehen, dass das System ein von der Positionserfassungseinheit erfassbares Referenzierungsmittel zur Positionsbestimmung der Messeinheit in deren Verfahrbereich aufweist. Im Rahmen dieser Schrift werden unter dem Begriff "Referenzierungsmittel" solche Mittel verstanden, welche in dem Arbeitsbereich der Messeinheit, bspw. einem Messraum einer Kraftfahrzeugwerkstatt, ein absolutes Koordinatensystem für die Messeinheit bereitstellen, welche es dieser ermöglichen, jederzeit ihre Position und/oder Orientierung zu erfassen. Die Verwendung von Referenzierungsmitteln erlaubt eine besonders exakte und genaue Positionierung der Messeinheit gegenüber einem in einem vorbestimmten Messbereich angeordneten Kraftfahrzeug. Fehlmessungen und/o der fehlerhafte Ausrichtungen des vorteilhafter Weise vorgesehenen Ausrichtelements aufgrund von Positionierungsfehlern können somit in besonders zuverlässiger Weise vorgebeugt werden.

Die Ausgestaltung der Referenzierungsmittel ist dabei grundsätzlich frei wählbar. Hierbei kann es sich bspw. um ein in einen Werkstattboden eingelassenes, ein Koordinatensystem bildendes Drahtgitter handeln, welches eine exakte Positionserfassung durch die Positioniererfassungseinheit ermöglicht. Nach einer weiteren Ausgestaltung der Erfindung ist jedoch vorgesehen, dass die Referenzierungsmittel optisch durch die Positionserfassungseinheit erfassbare Markierungen aufweisen. Bei den Markierungen kann es sich bspw. um sogenannte mit Kameras erfassbare Tags, bzw. Etiketten handeln, welche nach einer vorteilhaften Weiterbildung der Erfindung im Boden und/oder Deckenbereich angeordnet sind.

Die Anordnung der optisch erfassbaren Markierung erlaubt eine besonders einfache Herstellung eines Messbereichs innerhalb einer Kraftfahrzeugwerkstatt. Hierzu wird ein zur Vermessung vorgesehener Bereich mit entsprechend optisch erfassbaren Markierungen versehen, welches es der Messeinheit erlauben, in besonders einfacher Weise die jeweilige Position im Raum zu erfassen. Insbesondere die Anordnung im Deckenbereich stellt eine besonders wartungsarme und zuverlässige Möglichkeit zur Anordnung von Referenzierungsmitteln dar, wobei diese vor äußeren Einflüssen und Verschmutzungen geschützt sind.

Durch die Steuereinheit erfolgt nach einer Festlegung der durchzuführenden Vermessungstätigkeiten eine automatische Verstellung der Messeinheit gegenüber dem Kraftfahrzeug, wobei hierzu in der Steuereinheit oder in einer mit der Steuereinheit verbundenen Datenbank die jeweiligen fahrzeugspezifischen Daten hinterlegt sind. Die selbsttätige Verstellung der Messeinheit, wobei die Steuereinheit hierzu über die Verfahreinheit eine entsprechende Verstellung bewirkt, erlaubt es, vollständig auf eine nutzerseitige Verstellung zu verzichten. Die Positionserfassungseinheit gewährleistet dabei eine exakte Ausrichtung der Messeinheit und ggf. eines Ausrichtelements gegenüber dem Fahrzeug, wobei dann nach Festlegung des Fahrzeugtyps und des/der zu überprüfenden bzw. auszurichtenden Fahrzeugsensors bzw. Kameras das vorteilhafterweise vorgesehene Ausrichtelement selbsttätig in die hierfür erforderliche relative Position gegenüber dem Kraftfahrzeug gelangt.

Eine mit einem Ausrichtelement weitergebildete Messeinheit lässt sich somit universell für verschiedene Fahrzeugtypen und Sensoren und/oder Kameras verwenden, wobei für die jeweiligen Tätigkeiten die Positionierungs- und Ausrichtdaten durch die Steuereinheit abgefragt werden können. Die derart weitergebildete Messeinheit erlaubt auch die einfache Ausrichtung von Kameras und Sensoren, wenn hierfür die Anordnung von Ausrichtelementen an mehreren Positionen erforderlich ist. So kann die Messeinheit über die Verfahreinheit nacheinander die hierfür erforderlichen Positionen anfahren, um eine exakte Ausrichtung zu ermöglichen.

Nach einer weiteren Ausgestaltung der Erfindung ist ferner vorgesehen, dass die Steuereinheit mit einer Hinderniserfassungseinheit verbunden ist. Eine Hinderniserfassungseinheit gewährleistet im autonomen Betrieb der Messeinheit, dass diese nicht mit möglicherweise im Verfahrbereich angeordneten Hindernissen kollidieren. Die Hinderniserfassungseinheit kann dabei bspw. auf Basis von Lidarsensoren, Ultraschallsensoren oder Kameras erfolgen.

Zur Ausrichtung der Messeinheit gegenüber dem Kraftfahrzeug kann die Positionserfassungseinheit mit geeigneten Sensoren bspw. Beschleunigungssensoren, Magnetfeldsensoren, Neigungssensoren versehen sein, die eine exakte Ausrichtung des Ausrichtelements gegenüber dem Kraftfahrzeug ermöglichen. Nach einer weiteren Ausgestaltung der Erfindung ist vorgesehen, dass die Positionserfassungseinheit eine Vorrichtung zur Wegmessung aufweist. Diese basiert bspw. auf optischen Wegsensoren oder Drehgebern und erhöhen die Genauigkeit der Positionierung der Messeinheit in ergänzender Weise. Die Wegmessung erlaubt dabei eine exakte Kontrolle des zurückgelegten Werts und Richtung.

Nach einer weiteren Ausgestaltung der Erfindung ist ferner vorgesehen, dass die Messeinheit eine Signaleinheit zum Umgebungsschutz aufweist. Hierbei kann es sich bspw. um Warnleuchten wie bspw. Rundumleuchten handeln, welche im Betrieb der Messeinheit, insbesondere im Verfahrbetrieb der Umgebung den Verstellvorgang signalisieren.

Ein Ausführungsbeispiel der Erfindung wird nachstehend mit Bezug auf die Zeichnungen erläutert. In den Zeichnungen zeigen:
- Fig. 1: eine schematische Darstellung einer Justiereinheit in einer Seitenansicht und
- Fig. 2: eine schematische Darstellung der Anordnung der Justiereinheit von Fig. 1 gegenüber einem Kraftfahrzeug.

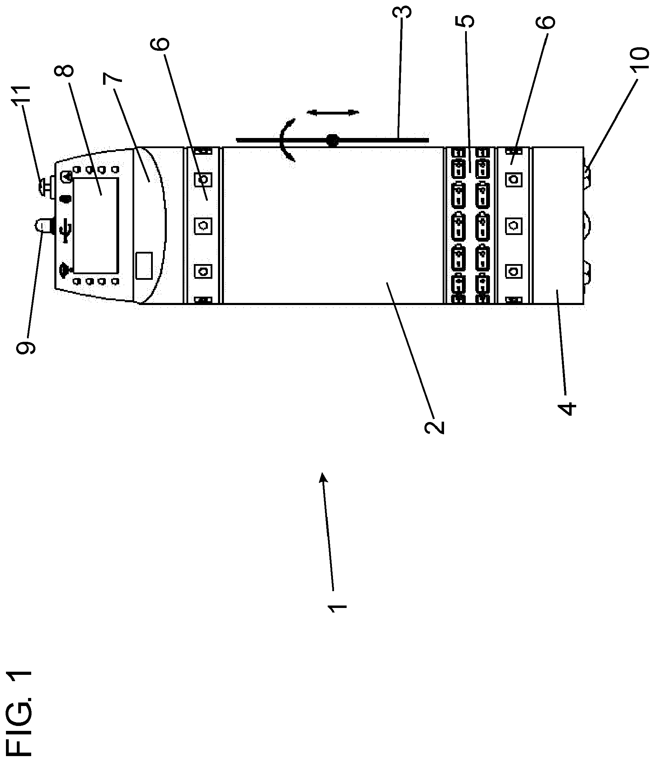

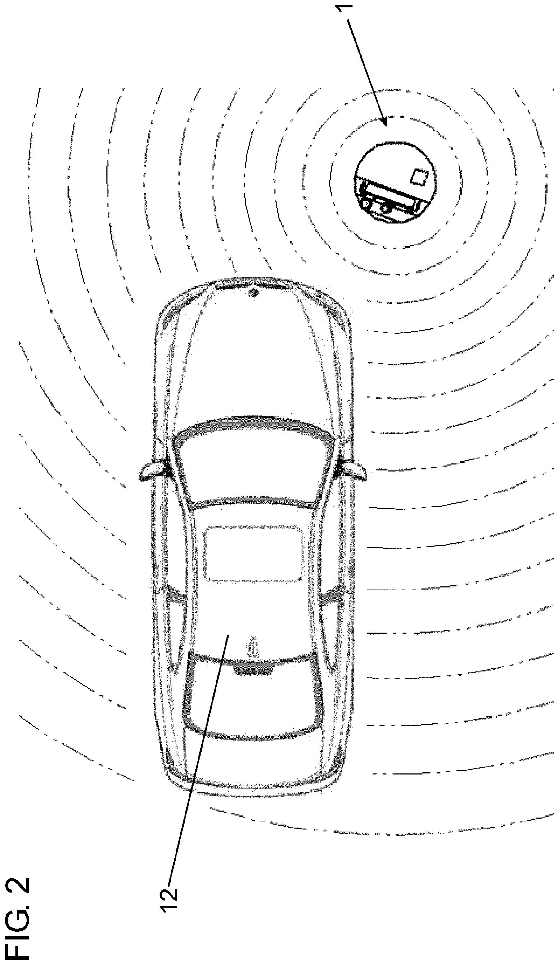

In Fig. 1 ist eine Messeinheit 1 in einer Seitenansicht dargestellt. Diese weist einen Grundträger 2 auf, an dem ein Laserscanner 3 in der Höhe verstellbar sowie neigbar gegenüber dem Grundträger 2 angeordnet ist. Der Grundträger 2 ist mit einer als Fahrwerk 4 ausgebildeten Verfahreinheit verbunden, welche eine selbsttätige Verstellung der Messeinheit 1 im Raum gegenüber einem Kraftfahrzeug 12 erlaubt (vgl. Fig. 2).

Zur Energieversorgung der Messeinheit 1 ist ein Akkumodul 5 vorgesehen, welches zur Energieversorgung sämtlicher Einheiten der Messeinheit 1 dient. Hierbei handelt es sich neben den Sensormodulen 6, welche mit einer hier nicht dargestellten Positionserfassungseinheit verbunden sind, ferner um die hier nicht dargestellte zentrale Steuereinheit, eine hier ebenfalls nicht dargestellte Kommunikationseinheit, mittels derer für den Messvorgang erforderliche Daten bspw. bei einer externen Datenbank abgefragt werden können auch um die zentrale Steuereinheit zur selbsttätigen Steuerung und Ausrichtung der Messeinheit 1 gegenüber dem Kraftfahrzeug 12. Eine Steuerung der Messeinheit 1 kann über eine Bedieneinheit 7 erfolgen, welche ein Display 8 aufweist. Ein an der Bedieneinheit 7 angeordnete Signalleuchte 9 dient zur Signalisierung des Betriebs der Messeinheit 1.

Zur Verstellung der Messeinheit 1 weist das Fahrwerk 4 Rollen 10 auf, über deren Antrieb die Messeinheit 1 sowohl verfahren als auch verdreht werden kann. Ein Not-Aus 11 erlaubt im Störfall eine sofortige Unterbrechung des Messvorgangs.

### Bezugszeichenliste

- 1: Messeinheit
- 2: Grundträger
- 3: Laserscaner
- 4: Fahrwerk
- 5: Akkumodul
- 6: Sensormodule
- 7: Bedieneinheit
- 8: Display
- 9: Signalleuchte
- 10: Rollen
- 11: Not-Aus
- 12: Kraftfahrzeug

## Patentansprüche

1. System zur automatisierten Vermessung von Kraftfahrzeugen, insbesondere Pkws, mit einer Messeinheit (1) aufweisend,
- eine Scaneinheit (3) zur
- berührungslosen und/oder taktilen 3D-Erfassung der Geometrie der Kraftfahrzeugkarosserie und/oder
- Vermessung des Fahrwerks des Kraftfahrzeugs
- eine Verfahreinheit zur Verstellung und Ausrichtung der Messeinheit (1), die als Fahrwerk (4) mit einem elektromotorischen, mit Rollen (10) verbundenen Antrieb ausgebildet ist, welcher in einfacher Weise eine freie Positionierbarkeit der Messeinheit (1) im Raum, insbesondere in der Werkstatt gegenüber dem Kraftfahrzeug (12) ermöglicht
- ein verstellbar an der Messeinheit (1) angeordnetes Ausrichtelement zur Ausrichtung von Fahrzeugsensoren und/oder -kameras an dem Kraftfahrzeug und
- eine zentrale Steuereinheit zur selbsttätigen Steuerung der Messeinheit (1), zur Ausrichtung der Scaneinheit gegenüber dem Kraftfahrzeug und zur Ausrichtung des Ausrichtelements.

2. System nach Anspruch 1, **dadurch gekennzeichnet, dass** die Scaneinheit zur optischen Erfassung der Geometrie der Kraftfahrzeugkarosserie und/oder Vermessung des Fahrwerks ausgebildet ist und insbesondere einen Laserscanner (3) aufweist.

3. System nach Anspruch 1 oder 2, **gekennzeichnet durch** eine Kommunikationseinheit, die zur Übermittlung von Kraftfahrzeugdaten und/oder Scandaten mit der Steuereinheit verbunden ist.

4. System nach einem oder mehreren der vorgehenden Ansprüche, **dadurch gekennzeichnet, dass** die Messeinheit (1) eine mit der Verfahreinheit verbundene Positionserfassungseinheit zur Positionsbestimmung der Scaneinheit und/oder des Ausrichtelements gegenüber dem Kraftfahrzeug und/oder den Fahrzeugsensoren und/oder -kameras aufweist.

5. System nach Anspruch 4, **gekennzeichnet durch** ein Referenzierungsmittel zur Positionsbestimmung der Messeinheit (1) in deren Verfahrbereich, das von der Positionserfassungseinheit erfassbar ist.

6. System nach Anspruch 5, **dadurch gekennzeichnet, dass** die Referenzierungsmittel optisch durch die Positionserfassungseinheit erfassbare Markierungen aufweisen.

7. System nach einem oder mehreren der vorgehenden Ansprüche 5 und 6, **dadurch gekennzeichnet, dass** die Referenzierungsmittel im Boden und/oder Deckenbereich angeordnet sind.

## Claims

1. A system for automated measurement of motor vehicles, in particular passenger cars, with a measuring unit (1) comprising
- a scanning unit (3) for
- contactless and/or tactile 3D detection of the geometry of the motor vehicle bodywork and/or
- surveying of the chassis of the motor vehicle,
- a travel unit for moving and orienting the measuring unit (1), which is designed as a chassis (4) with an electromotive drive connected to rollers (10), which makes it possible to freely position the measuring unit (1) in a simple manner in space, in particular in the workshop relative to the vehicle (12) and
- an orientation element adjustably arranged on the measuring unit (1) for orienting vehicle sensors and/or cameras on the motor vehicle (12).
- a central control unit for automatically controlling the measuring unit (1) for orienting the scanning unit relative to the motor vehicle (12) and for orienting the orientation element.

2. The system according to claim 1, **characterized in that** the scanning unit is designed to optically detect the geometry of the motor vehicle bodywork and/or survey the chassis, in particular comprises a laser scanner (3).

3. The system according to claim 1 or 2, **characterized in that** the control unit is connected to a communication unit for transmitting the motor vehicle data and/or scan data.

4. The system according to one or more of the preceding claims, **characterized in that** the measuring unit (1) comprises a position detection unit connected to the travel unit for determining the position of the scanning unit and/or orientation element relative to the motor vehicle and/or the vehicle sensors and/or cameras.

5. The system according to claim 4, **characterized by** referencing means that can be detected by the position detection unit for determining the position of the measuring unit (1) within the travel range thereof.

6. The system according to claim 5, **characterized in that** the referencing means comprise markings that can be optically detected by means of the position detection unit.

7. The system according to one or more of the preceding claims 5 and 6, **characterized in that** the referencing means are arranged in the floor and/or ceiling region.

## Revendications

1. Système de mesure automatisée des véhicules à moteur, en particulier des voitures particulières, comportant une unité de mesure (1),
- une unité de balayage (3) pour
- détection 3D sans contact et/ou tactile de la géométrie de la carrosserie du véhicule à moteur et/ou
- mesure du châssis du véhicule à moteur
- une unité de déplacement et d'alignement de l'unité de mesure (1), conçue comme un châssis (4) à entraînement électromoteur relié à des rouleaux (10), qui permet de positionner l'unité de mesure (1) librement dans l'espace, en particulier dans l'atelier par rapport au véhicule à moteur (12), de manière simple
- un élément d'alignement disposé de manière réglable sur l'unité de mesure (1) pour aligner les capteurs du véhicule et/ou les caméras sur le véhicule à moteur et
- une unité centrale de commande pour contrôler automatiquement l'unité de mesure (1), pour aligner l'unité de balayage par rapport au véhicule à moteur et pour aligner l'élément d'alignement.

2. Système selon la revendication 1, **caractérisé par le fait que** l'unité de balayage est conçue pour la détection optique de la géométrie de la carrosserie du véhicule à moteur et/ou la mesure du châssis et comporte en particulier un scanner laser (3).

3. Système selon la revendication 1 ou 2, **caractérisé par** une unité de communication connectée à l'unité de contrôle pour transmettre les données du véhicule à moteur et/ou les données de balayage.

4. Système selon l'une ou plusieurs des revendications précédentes, **caractérisé par le fait que** l'unité de mesure (1) comporte une unité de détection de position reliée à l'unité de déplacement pour déterminer la position de l'unité de balayage et/ou de l'élément d'alignement par rapport au véhicule à moteur et/ou aux capteurs et/ou caméras du véhicule.

5. Système selon la revendication 4, **caractérisé par** un moyen de référencement pour déterminer la position de l'unité de mesure (1) dans sa plage de déplacement, qui peut être détectée par l'unité de détection de position.

6. Système selon la revendication 5, **caractérisé par le fait que** les moyens de référence ont des marques qui peuvent être détectées optiquement par l'unité de détection de position.

7. Système selon l'une ou plusieurs des revendications précédentes 5 et 6, **caractérisé par le fait que** les moyens de référencement sont disposés dans la zone du sol et/ou du plafond.
